(19)

Europäisches Patentamt
European Patent Office
Office européen des brevets

(11) **EP 3 471 282 B1**

(12) **EUROPEAN PATENT SPECIFICATION**

(45) Date of publication and mention of the grant of the patent:
**08.12.2021   Bulletin 2021/49**

(21) Application number: **18199202.5**

(22) Date of filing: **08.10.2018**

(51) Int Cl.:
**H04B 3/54** *(2006.01)*

(54) **METHOD AND SYSTEM FOR IMPROVING SETUP OF NETWORK DEVICES**

VERFAHREN UND SYSTEM ZUR VERBESSERUNG DER EINRICHTUNG VON NETZWERKVORRICHTUNGEN

PROCÉDÉ ET SYSTÈME D'AMÉLIORATION DE LA CONFIGURATION DE DISPOSITIFS DE RÉSEAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **10.10.2017   GB 201716598**

(43) Date of publication of application:
**17.04.2019   Bulletin 2019/16**

(73) Proprietor: **CANON KABUSHIKI KAISHA**
**Ohta-ku**
**Tokyo 146-8501 (JP)**

(72) Inventors:
• **MERLET, Hervé**
 **35530 SERVON SUR VILAINE (FR)**
• **LAGRANGE, Pascal**
 **35520 LA CHAPELLE DES FOUGERETZ (FR)**

(74) Representative: **Santarelli**
 **49, avenue des Champs-Elysées**
 **75008 Paris (FR)**

(56) References cited:
**US-A1- 2017 026 206**

EP 3 471 282 B1

**Description**

FIELD OF THE INVENTION

The present invention relates to communication between devices within communication networks, for example to communication between devices of a digital video surveillance system comprising new digital video surveillance items and/or retrofitted analog video surveillance items, and to a method and a system for improving setup of such network devices. The present invention makes it possible to reduce crosstalk effects along different paths when connecting edge devices such as video surveillance cameras powered by power source equipment, where power and data are conveyed over one same two-wire cable medium such as a coaxial cable.

BACKGROUND OF THE INVENTION

Although a typical digital video surveillance system comprises two types of wire network, a first type for transporting data and a second type for distributing power to the network devices, it may be useful to use the same wire network for transporting data and for distributing power, in particular for the sake of saving costs. The technology known as power over Ethernet (PoE) makes it possible to carry both data and power over the same wires. Using such a technology, a digital video surveillance system may be based on an existing local area network (LAN) supporting power distribution.

Analog camera surveillance systems typically use two different cables for transporting data and for distributing power: one coaxial cable is used for transporting analog video signal and another cable is used for distributing power to the cameras.

Since digital video surveillance systems have numerous advantages over analog camera surveillance systems, there is often a need to replace analog camera surveillance systems by digital camera surveillance systems. When doing so, it is tried to keep as many elements of the analog camera surveillance system as possible to reduce the costs. For the sake of illustration, analog cameras may be replaced by digital network cameras such as internet protocol (IP) cameras by using adapters.

It is observed that analog video surveillance systems were generally installed in a star topology, wherein each camera is connected to a central point. Accordingly, when such an analog video surveillance system is upgraded or retrofitted in order to build a digital video surveillance system, an adapter is used both at the central point and at each digital camera to reuse the analog cable infrastructure.

The adapter located in the central point is used to convert data originating from a standard digital infrastructure, for example an Ethernet infrastructure, to data adapted to be transported by coaxial cables, referred to as "IP Coax Traffic", and to send the converted data over the coaxial cables to digital cameras, referred to as "IP Coax cameras". Similarly, it is used to convert data originating from digital cameras and received through the coaxial cables to data adapted to be transported via the digital infrastructure, for example the Ethernet infrastructure, referred to as "Ethernet Traffic", and to send the converted data to the digital infrastructure. Moreover, the adapter is used to provide power to the digital cameras over the coaxial cables.

Each of the adapters located within the cameras, referred to as "Coax terminal adapters", is connected to a digital port of the corresponding digital camera, for example an Ethernet port. The "Coax terminal adapter" is used to convert IP Coax traffic originating from a coaxial cable to Ethernet traffic and to send it to the digital camera. Likewise, the adapter is used to convert Ethernet traffic originating from the digital camera to IP Coax Traffic and to send it to the coaxial cable.

Moreover, the adapters may be adapted to receive power from the coaxial cable and to deliver it to the digital camera, for example through the Ethernet port.

There exist Coax terminal adapters that are embedded within digital cameras.

In these technologies, each Coax terminal adapter comprises a power management module configured to manage the power distribution to the camera. For the sake of illustration, a power management module may be configured to deliver power to an IP camera according to the standards for power transport over Ethernet known as PoE (IEEE802.3af) or PoE+ (IEEE802.3at).

The analog video surveillance systems to be upgraded are often equipped with 75 ohm coaxial cables. However, some of them and some network extensions are equipped with single or multiple copper pair wire cables as unshielded twisted pair (UTP) or shielded and foiled twisted pair (S/FTP) cables used for Ethernet installation.

The technology used for the retrofit or upgrade of old analog video surveillance systems, which may also be used for new installations, is often the technology used for power line communication (PLC). It may be used to provide data communication networks making it possible to exchange data over very long cable distances, typically greater than 100m (Ethernet technology is limited to a maximum cable length of 100 meters). The PLC technologies known as Homeplug AV and HD-PLC are both compliant with the IEEE 1901-2010 standard.

The PLC technology relies on orthogonal frequency-division multiplexing (OFDM) or wavelet signal modulation in a frequency band from 1.8 to 30.0 MHz for the HomePlug AV, up to 88 MHz for the HomePlug AV2. Due to the length of the cables in video surveillance systems, typically ranging from 10 meters up to 900 meters, the PLC technology is well adapted and thus, often used.

It is to be noted that cables are often distributed through bundles in video surveillance systems, where the lines tied together over significant distances (e.g. from 10m up to 100m). Therefore, due to the signal modulation from 1.8 MHz to 30 MHz and the close proximity of the cables, there is a high risk of observing crosstalk phenomena between the cables. This would result in significant noise interference between the communications on the several cables as well as unexpected inter-network communications. Such inter-network communications may cause wrong network association during setup, i.e. association of two devices via a communication path comprising a crosstalk link or crosstalk bridge.

The crosstalk phenomena result from electromagnetic energy leaking from one cable (or indeed any source) and being picked up by another adjacent cable. A main factor leading to increase of crosstalk effects is the presence of long parallel close runs of the cables. These should be avoided if possible. In practice, unscreened bundled cables tend to suffer the most from this phenomenon.

A solution for crosstalk mitigation relies on time division multiplexing between any two cables that are interfering with each other due to crosstalk effect. For instance, according to the IEEE 1901-2010 standard, the devices in charge of managing such cables, also referred to as basic service set manager (BM), negotiate time periods during which devices connected to one cable operate the latter while the devices connected to another cable shall remain silent. This is referred as neighbour network management. An example of such a solution is described in patent application WO 2016/165948.

Another solution consists in pre-assigning specific network passwords, or associated network membership keys (NMK), so as to differentiate data packets to be sent via different bundled cables. This would therefore prevent aforementioned wrong path association phenomena from occurring. However, such approach would require significant installation and maintenance effort when considering deployment of large scale video surveillance systems (that may comprise hundreds to thousands of cameras), as this would require configuring such NMKs for each camera to be installed while keeping track of all the NMKs to be used. Therefore, most camera installers may rely on a single and unique NMK for all the network devices of a given installation.

There also exist solutions based on frequency spectrum management in order to reduce inter-cable interference as described, for example, in patent applications WO 2012/109327 and WO 2012/119382.

Besides, in the document US 2017/026206, in a network comprising a central office (CO) linked with customer premises equipment (CPE), the CO detects crosstalk by analysing a frequency response of the signal on two communications links (U0/U1 bands and U2/U3 bands), and by calculating the slope of response using "*a square fit method the mean squared error of such a fit*".

Although these solutions are efficient, there is a continuous need to improve communication between devices through communication networks, in particular in communication comprising bundled cables.

SUMMARY OF THE INVENTION

The present invention has been devised to address one or more of the foregoing concerns.

In this context, there is provided a solution for improving setup of network devices.

According to a first object of the invention, there is provided a method of managing communication between a first network device and a second network device in a communication network interconnecting a plurality of network devices via a plurality of communication lines, the method comprising the steps of:

> associating the first device with the second device via a communication link so that the first device and the second device can exchange data;
> receiving data from the second device via the communication link;
> constructing a spectrum profile of the communication link during the receiving step; and
> based on the constructed spectrum profile, determining whether or not the communication link comprises at least two communication lines linked via crosstalk,
> wherein the receiving step, the constructing step, and the determining step are carried out in the first device, and

wherein the step of determining whether or not the communication link comprises at least two communication lines linked via crosstalk comprises a step of determining at least two subsets of signal carriers, differences between signal-to-noise values associated with signal carriers of one of the at least two subsets being lower than a threshold, for each of the at least two subsets, the step of determining whether or not the communication link comprises at least two communication lines linked via crosstalk being based on characteristics of the at least two subsets.

The method of the invention makes it possible to detect wrong associations between network devices, in particular associations via cables connected to each other via crosstalk links, and thus, makes it possible to setup network devices appropriately. Moreover, the method of the invention makes it possible to provide a user with information directed to crosstalk levels between cable segments (or liner bus) of several neighbour PLC networks. Furthermore, it makes it possible to identify cables that may lead to crosstalk links and/or to alert a user about a risk resulting from crosstalk links.

Optional features of the invention are further defined in the dependent appended claims.

According to a second object of the invention, there is provided an apparatus for a first network device for managing communication with a second network device in a communication network interconnecting a plurality of network devices via a plurality of communication lines, as disclosed by claim 11.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system". Furthermore, the present invention may take the form of a computer program product embodied in any tangible medium of expression having computer usable program code embodied in the medium.

Since the present invention can be implemented in software, the present invention can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g. a microwave or RF signal.

## BRIEF DESCRIPTION OF THE DRAWINGS

Other features and advantages of the invention will become apparent from the following description of non-limiting exemplary embodiments, with reference to the appended drawings, in which:

**Figure 1a** schematically illustrates an example of a video surveillance system wherein embodiments of the invention may be implemented;

**Figure 1b** illustrates an example of a block diagram of a terminal adapter;

**Figure 1c** illustrates an example of a block diagram of a power management module of a terminal adapter;

**Figure 2** illustrates a crosstalk phenomenon between two close cables;

**Figure 3** illustrates some steps of an algorithm for detecting a wrong association between devices according to embodiments of the invention;

**Figure 4** illustrates crosstalk effects on a signal spectrum;

**Figure** 5 illustrates steps making it possible to characterize an SNR spectrum profile in order to determine whether or not crosstalk effects are involved along a communication path;

**Figure** 6 illustrates an example of steps for constructing and classifying an SNR spectrum profile according to a first embodiment;

**Figure** 7 illustrates an example of steps for constructing and classifying an SNR spectrum profile according to a second embodiment;

**Figure** 8 presents a circuit for illustrating an example of calculation of the resistance of a cable;

**Figure 9** illustrates an example of exchanges of messages when detecting a wrong association between devices according to embodiments of the invention;

**Figure 10** illustrates examples of messages exchanged between adapter modules of edge devices according to embodiments of the invention;

**Figure 11** illustrates examples of messages exchanged between an adapter module and an IP camera of an edge device according to embodiments of the invention; and

**Figure 12** is an example of a functional bloc diagram of an edge device, such as a camera, and of a receiver.

## DETAILED DESCRIPTION OF EMBODIMENTS OF THE INVENTION

According to embodiments of the invention, network devices to be setup or of which setup is to be checked are firstly associated so that they can exchange data before the latter are analysed in order to determine whether or not the communication path between these devices is subject to crosstalk effects. If crosstalk effects have an actual influence on the communication between the devices, they may be disassociated to be associated again via another communication path in order to avoid communication via crosstalk links.

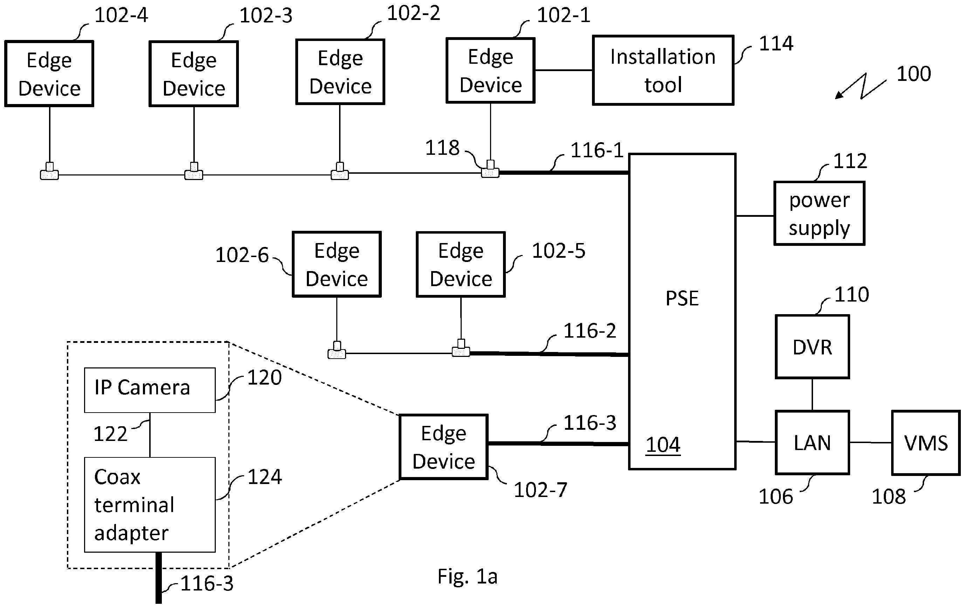

**Figure 1a** schematically illustrates an example of a video surveillance system 100 wherein embodiments of the invention may be implemented. For the sake of illustration, the video surveillance system of Figure 1a may be an IP over coax video surveillance system.

Still for the sake of illustration, it is assumed that video surveillance system 100 is a retrofitted digital video surveillance system based on an analog video surveillance system that has been upgraded to transport internet protocol (IP) data. To that end, the analog cameras have been replaced by IP cameras and the wire infrastructure has been kept.

Video surveillance system 100 comprises edge devices 102-m (m being an index from 1 to M, M=7 in the illustrated example), for example IP surveillance cameras (hereinafter termed cameras for the sake of simplicity), an item of power source equipment (PSE) 104 (also known as an "Ethernet over Coax receiver" (EoC receiver) or "IP over Coax receiver"), a local area network (LAN) denoted 106, a video monitoring system (VMS) denoted 108, a digital video recorder (DVR) denoted 110, a power supply denoted 112, and an installation tool denoted 114.

According to the illustrated example, the wire infrastructure kept from the analog video surveillance system comprises cables 116-1 to 116-3 connecting edge devices 102-1 to 102-7 to PSE 104. Cables 116-1 to 116-3 used in the analog video surveillance system on which is based digital video surveillance system 100 were used to transport analog video signals. In retrofitted system 100, these cables are used to transport IP video, control data, and power supply. They can be coaxial cables and can be for example 300 meters long or more. However, it is to be understood that any other types of cables used to the transport of analog video signals and that are adapted to the transport of digital video may be used. Likewise, cables of any other lengths making it possible to transport digital video signals can be used.

PSE 104 provides power to coaxial cables 116-1 to 116-3 (and thus to edge devices 102-m coupled thereto). Moreover, PSE 104 receives uplink IP LAN traffic from LAN 106, encapsulates the traffic into packets suitable for digital data transport on the coaxial cables such as the Home Plug AV protocol, and sends the packets on the coaxial cables. Conversely, PSE 104 extracts IP LAN traffic from packets received on coaxial cables 116-1 to 116-3 and forwards them to the LAN 106.

As illustrated, coaxial cables 116-1 to 116-3 can be used to connect one or several edge devices, directly or indirectly, to PSE 104. For the sake of illustration, edge device 102-7 (e.g. an IP camera) is directly connected to coaxial cable 116-3 while edge device 102-1 is connected to coaxial cable 116-1 via a T-type connector 118. T-type connectors can be used for increasing the number of edge devices connected to the same coaxial cable. In the illustrated example, one edge device is connected to coaxial cable 116-3, two edge devices are connected to coaxial cable 116-2, and four edge devices are connected to coaxial cable 116-1.

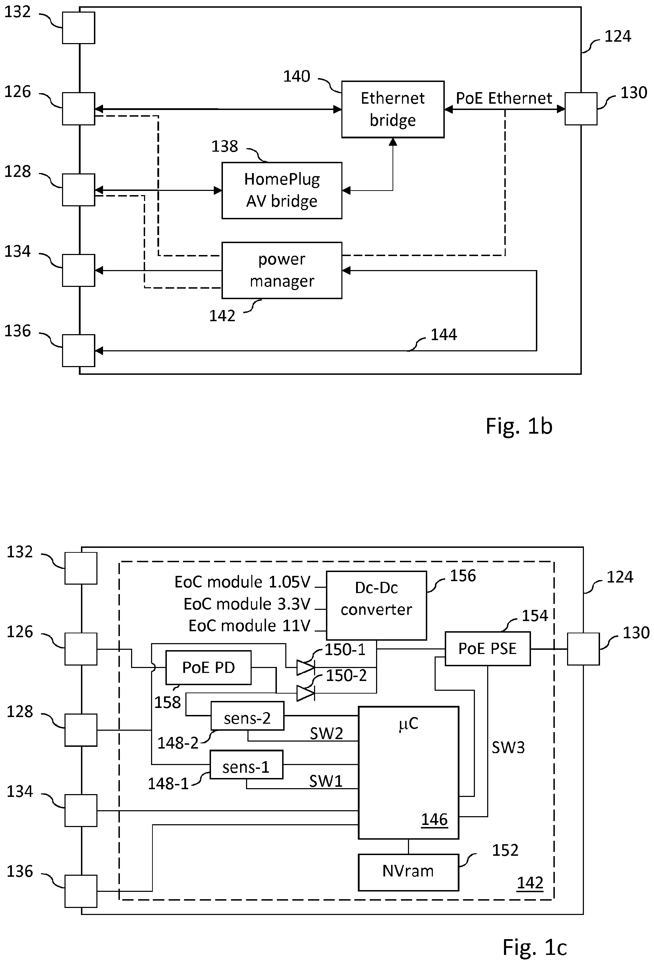

As illustrated, an edge device such as edge device 102-7 may comprise an IP camera denoted 120 (for example a camera of the model Dome PTZ VB-M50B from Canon) connected by an Ethernet cable denoted 122 to a terminal adapter denoted 124. Typically, terminal adapter 124 is a coaxial terminal adapter. An example of terminal adapter is described in more detail in reference to Figure 1b.

Although terminal adapter 124 and IP camera 120 are two different items of equipment in the illustrated example, it is to be noted that according to other embodiments, a terminal adapter may be embedded within a camera.

LAN 106 includes switches, routers, and gateways that are necessary to transport the IP video to VMS 108 and to digital video recorder 110. According to embodiments, VMS 108 is configured to display IP video streams for surveillance purposes, and digital video recorder 110 is configured to record IP video streams. Furthermore, VMS 108 may display power diagnosis information from the different edge devices, in particular from cameras when this information is included in IP video streams sent by the cameras, this information being considered as part of the OSD (from "On Screen Display") data.

Installation tool 114 can be used to configure the cameras. It may be a mobile or a hand-held device for configuring cameras 'in-situ". According to embodiments, installation tool 114 is also configured to display power diagnosis information.

The cables used to connect edge devices to the PSE, to connect edge devices to T-type connectors, and/or to connect T-type connectors to the PSE may be coaxial cables, x/UTP cables, x/FTP cables, or two-wire cables.

**Figure 1b** illustrates an example of a block diagram of a terminal adapter such as Coax terminal adapter 124 in Figure 1a.

According to the illustrated example, terminal adapter 124 is connected to an IP camera (e.g. IP camera 120 in Figure 1a) through an Ethernet communication port denoted 130. It is configured to implement functions of Ethernet transport over coaxial cables and of power management. Terminal adapter 124 is configured to implement power sensing, voltage drop estimation, and correction of the estimated voltage drop.

As illustrated, terminal adapter 124 further comprises a first RJ45 port denoted 126 which is used for camera setup purposes and for display of detailed power diagnosis results, a Bayonet Neill - Concelman (BNC) port denoted 128 which is used for IP communication over a coaxial cable, and, as mentioned above, a second RJ45 port denoted 130 for connecting the IP camera (e.g. IP camera 120). Naturally, other configurations may be considered.

Terminal adapter 124 further comprises a push button denoted 132 for resetting the terminal adapter, a LED set denoted 134 for displaying power diagnosis results, and a serial connector denoted 136. Serial connector 136 may be used for sending power diagnosis information to an external device, such as installation tool 114 in Figure 1a, connected to terminal adapter 124 through serial connector 136. Again, other configurations may be considered.

As illustrated, terminal adapter 124 comprises a HomePlug AV bridge denoted 138 which is configured to encapsulate camera IP traffic into HomePlug AV packets and to send them on a coaxial cable through BNC port 128. HomePlug AV Bridge 138 is also configured to extract IP traffic from received HomePlug AV packets and to forward this extracted IP traffic to an IP camera (e.g. IP camera 120 in Figure 1a).

According to the illustrated example, terminal adapter 124 further comprises an Ethernet bridge denoted 140 which is configured to mix IP traffic from the first RJ45 port 126, the HomePlug AV bridge 138, and the second RJ45 port 130 (i.e. from an IP camera).

Terminal adapter 124 further comprises a power management module denoted 142 (or power manager module) configured for providing power to the camera connected to the second RJ45 port. Power management module 142 receives power from BNC port 128 and/or from the first RJ45 port 126 and distributes power to the camera, to HomePlug AV Bridge 138, and to Ethernet Bridge 140. According to embodiments, power management module 142 distributes power according to the PoE standards. An example of a power management module is described by reference to Figure 1c.

For the sake of clarity, power flow is represented by dashed lines in Figure 1b.

According to the illustrated example, power management module 142 may communicate data to an external device (e.g. installation tool 114 in Figure 1a) through a serial line denoted 144 and serial connector 136. Power diagnosis information may therefore be sent to such an external device.

It is to be noted that it is possible to connect serial connector 136 directly to HomePlug AV Bridge 138, then have HomePlug AV Bridge 138 execue protocols.

It is also to be noted that the first RJ45 port 126 (i.e. the configuration port) is optional. In the case according to which it is not implemented, Ethernet bridge 140 is not required and can be removed.

**Figure 1c** illustrates an example of a block diagram of a power management module of a terminal adapter, for example power manager 142 of terminal adapter 124 in Figure 1b.

It is to be noted that the power management module illustrated in Figure 1c may also be embedded within a PSE.

As illustrated, power management module 142 comprises a first power sensor denoted 148-1, a second power sensor denoted 148-2, a first diode denoted 150-1, and a second diode denoted 150-2.

The first power sensor 148-1 is connected to a microprocessor denoted 146 and may be turned on or turned off using a first switch denoted SW1 (of which only the control signals are represented). Accordingly, microprocessor 146 controls the first sensor 148-1 using the first switch SW1. Likewise, the second power sensor 148-2 is connected to microprocessor 146 and may be turned on or turned off using a second switch denoted SW2 (of which only the control signals are represented). Again, microprocessor 146 controls the second sensor 148-2 using the first switch SW2.

Microprocessor 146 is configured to control and direct the execution of the instructions or portions of software code of the program or programs for managing power, which instructions are stored in storage means, such us a NVRAM circuit denoted 152.

Power is received from BNC port 128 and/or from RJ45 port 126 (configuration port). It is delivered to the camera by using a PoE PSE ("Power over Ethernet Power Sourcing Equipment") circuit denoted 154 under the control of microprocessor 146.

As illustrated, PoE PSE circuit 154 comprises a connexion interface suitable for connecting power management module 142 to a camera (e.g. to the camera 120 in Figure 1a).

PoE PSE circuit 154 is connected to microprocessor 146 and may be turned on or turned off according to a third switch denoted SW3 (that only the control signals is represented).

According to the example illustrated in Figure 1c, power received from BNC port 128 goes through first power sensor 148-1 and first diode 150-1. Signals originating from first power sensor 148-1 are used by microprocessor 146 to estimate the power that power management module 142 is able to supply to the camera and to determine the available power delivered by the PSE on the coaxial cable to which power management module 142 is connected.

Still according to the example illustrated in Figure 1c, the first and second diodes 150-1 and 150-2 combine respectively the power received from RJ45 port 126 and BNC port 128 and transmit it to both a DC-DC converter denoted 156 and PoE PSE circuit 154.

DC-DC converter 156 converts the PoE and/or PoC ("Power over Coax") input power voltage into the power needed by the terminal adapter 124. The voltages on PoE and PoC may be for example 56 V and the voltages needed by terminal adapter 124 may be for example 11 volts, 1.3 volts and 1.05 volts.

According to the illustrated example, the power received from RJ45 port 126 goes through a PoE PD ("Powered Device") front end circuit denoted 158. Next, this power goes through second power sensor 148-2 and though second diode 150-2. The second power sensor is used by microprocessor 146 to estimate the power that power management module 142 is able to supply to the camera and to determine the available power delivered on the Ethernet cable connecting the terminal adapter 124 and the camera.

Thus, power management module 142 comprises means for estimating a power that the power management module 142 is able to supply via the connexion interfaces.

The camera connected to the terminal adapter comprising power management module 142 is powered by means of the power sent through second RJ45 port 130 that receives power from PoE PSE ("Power Source Equipment") circuit 154, PoE PSE circuit 154 receiving power as a combination of the power delivered by BNC port 128 (from the coaxial cable) through first diode 150-1 and the power delivered by first RJ45 port 126 through second diode 150-2.

According to the illustrated example, microprocessor 146 communicates power diagnosis information relating to a connected camera, for example by sending packets, by a serial communication link. To that end, microprocessor 146 is connected to serial port 136. Moreover, microprocessor 146 drives LEDs set 134 for power diagnosis feedback to an installer.

NVRAM circuit 152 may be used by microprocessor 146 to store and retrieve configuration parameters and parameters used when implementing the method of managing power according to the invention.

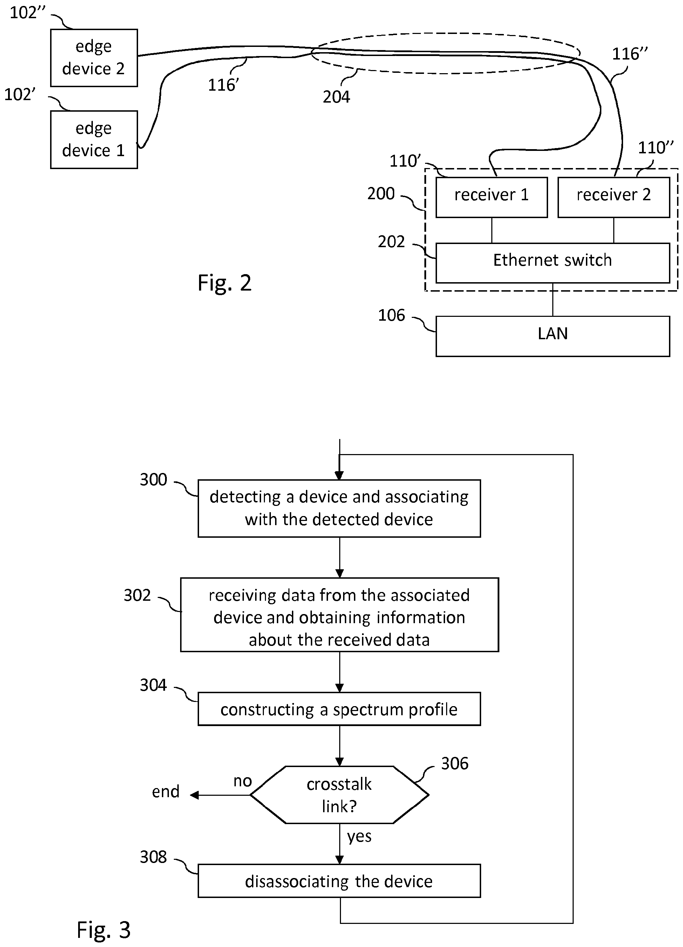

**Figure 2** illustrates a crosstalk phenomenon between two close cables.

As illustrated, a first edge device denoted 102', for example a camera comprising a terminal adapter, is connected to a first cable denoted 116' that is, in turn, connected to a first receiver denoted 110'. For the sake of illustration, first receiver 110' is situated within a technical room denoted 200, also called a central room. The set comprising edge device 102' and receiver 110' is part of a first power line communication (PLC) network.

According to the illustrated example, receiver 110' is connected to a LAN denoted 106 via an Ethernet switch denoted 202.

Likewise, a second edge device denoted 102", for example a camera comprising a terminal adapter, is connected to a second cable denoted 116" that is, in turn, connected to a second receiver denoted 110". Still for the sake of illustration, it is assumed that second receiver 110" is also situated within technical room 200. The set comprising edge device 102" and receiver 110" is part of a second PLC network.

Again, receiver 110" is connected to LAN 106 via Ethernet switch 202.

Cables 116' and 116" could be coaxial cables, x/UTP cables, x/FTP cables, or single two-wire cables.

Each of the receivers 110' and 110" encapsulates uplink IP LAN traffic received from its LAN interface into packets suitable for digital data transport on cables, for example using the HomePlug AV protocol, and sends them on the corresponding coaxial cable (or x/UTP, x/FTP, or single two-wire cable). Moreover, each of the receivers 110' and 110" extracts IP LAN traffic from packets received on its downlink interface and forwards them to its LAN interface.

Assuming that cables 116' and 116" are bundled cables (at least partially) and that they are very close over a significant length (e.g. from some meters to several tens of meters), as illustrated with reference 204, the cable signals of the first network and of the second network can cross the galvanic barrier by capacitive or by magnetic effects, or by electromagnetic coupling, generating a crosstalk signal.

Among the consequences caused by such crosstalk effects, an edge device may establish a communication link with a wrong device during setup. Indeed, at the power-on of an edge device, the latter may detect several devices with which a communication link may be established, at least one of these devices being linked to the edge device via a crosstalk link. If a communication link is established with such a device, the communication will not be reliable and efficient. Such a wrong association may also occur when the device with which a communication link should be established is powered-on after the setup of the edge device, if the latter detects another device which is detected due to a crosstalk effect.

This results in an association of an edge device, for example a camera, with a wrong device (i.e. via a wrong network).

Turning back to Figure 2, this may lead to an association between edge device 102' that should belong to the first communication network and receiver 110" that should belong to the second communication network, instead of receiver 110' (as illustrated), without real physical connection between these devices. Depending on the strength of the crosstalk signal, the data throughput may be very low compared to a direct link. As a result, images received from a camera that is connected using a crosstalk link are of very poor quality, generally without other information.

As mentioned above, this issue can be avoided in classical power line communication networks with the setup of different network keys (called NMKs in the HomePlug AV), i.e. here with a first NMK key to the first PLC network and a second NMK key for the second network. However, in large scale video surveillance systems, management of a huge number of different keys, one for each PLC network, is not adapted, and it is time consuming, and source of errors as explained above.

According to embodiments of the invention, wrong associations of devices are detected by analysing characteristics of data communication between these devices to establish spectrum profiles from which it is determined whether or not a communication link comprises a crosstalk link.

**Figure 3** illustrates some steps of an algorithm for detecting a wrong association between devices according to embodiments of the invention.

These steps, carried out in a first device, make it possible to manage an association between the first device and a second device in a communication network interconnecting several devices for communication via communication lines.

As illustrated, a first step (step 300) is directed to the detection of a second device and to associate the detected second device with the first device. During association, a communication link (or communication channel or path) is established between the two devices.

According to particular embodiments, the first device is an edge device, for example a camera, and the second device is a receiver that may be configured as a network coordinator (CCo). According to other embodiments, the role of the first device and of the second device are exchanged

Next, the first device obtained information about data received from the second device over the communication link established during association (step 302). According to particular embodiments, the obtained information concerns the spectrum of the received modulated signal, and more particularly the signal-to-noise ratio (SNR) spectrum provided after signal processing by a demodulator of the first device.

Next, a spectrum profile of the communication link during the receiving of the data is constructed or determined (step 304).

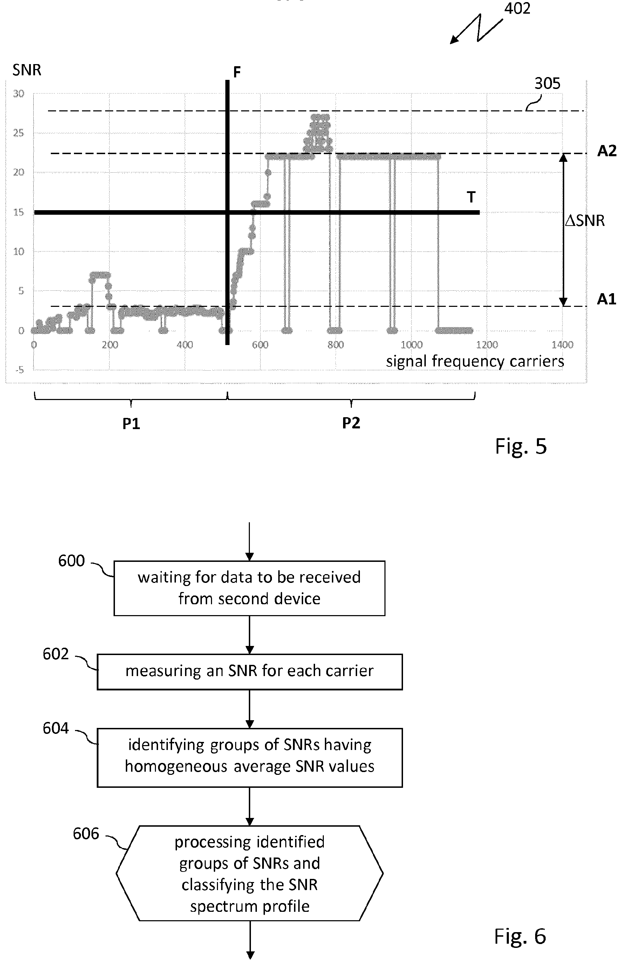

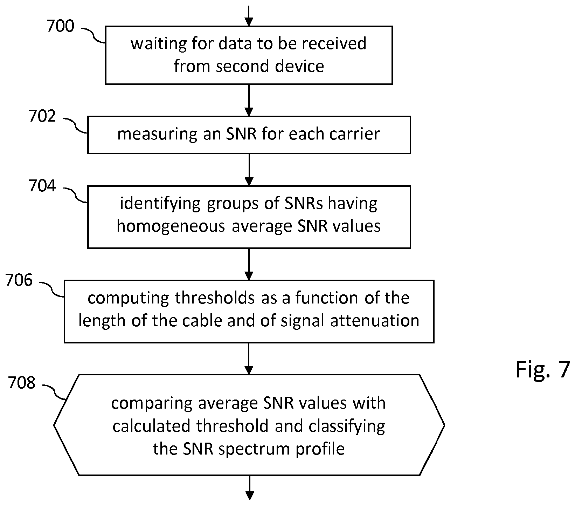

Then, a test is carried out to determine whether the receiving is carried out via a communication line connecting the first device to the second device or via a crosstalk link (step 306). According to embodiments, this is based on spectrum profile analysis and/or classification. As described hereafter by reference to Figures 5 and 7, profile classification can be based on comparisons or on thresholds, according to parameters defined by design and recorded in a memory of the first device.

If it is determined that the communication is carried out via a crosstalk link, the first device is disassociated from the second device (step 308). To that end, according to particular embodiments, the first device sends a notification to the network manager before disassociation. Such a notification may be sent if the data throughput along the communication link makes it possible to exchange messages between the first device and the second device.

After disassociation, steps 300 to 306 are preferably repeated to identify a second device with which a communication link may be established without using a crosstalk link. If there is no second device with which a communication link may be established without using a crosstalk link, the first device preferably blinks a visual alert using, for example, LEDs or other means.

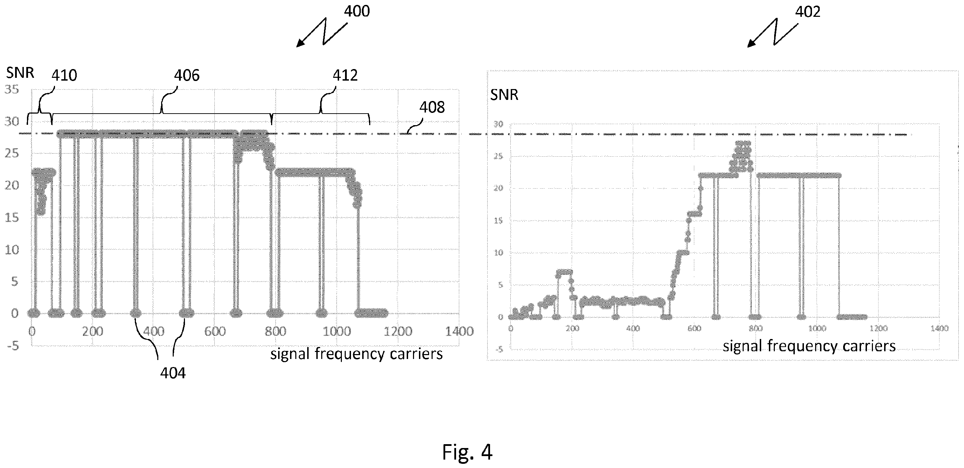

**Figure 4** illustrates crosstalk effects on a signal spectrum.

Plot 400 corresponds to the signal-to-noise ratio (SNR) as a function of the signal frequency carriers for a signal transmitted between two devices connected via two-wire communication lines. Plot 402 corresponds to the SNR as a function of the signal frequency carriers for a signal transmitted between two devices connected via a path based on two-wire communication lines and comprising a crosstalk link.

SNR is represented in dB and the carrier index increases with the signal frequency of the carrier (i.e. the greater the index, the higher is the signal frequency).

For the sake of illustration, HomePlug AV specifies 1155 carriers (as represented in Figure 4) between 1.8 and 30.0 MHz with 30 dB deep notches for Amateur Radio Bands (as illustrated with reference 404).

Analyzing the SNR as a function of the signal frequency carriers makes it possible to compare the signal strength to the noise. The SNR level of each signal frequency carrier may be provided by a demodulator comprised within each communication device for extracting information or data from a received signal.

As can be seen from plot 400, the SNR spectrum profile (reference 406) is flat at around 28 dB (reference 408) however, due to cable attenuation, the SNR slightly decreases for low frequencies (reference 410) and for high frequencies (reference 412), when no crosstalk effect is involved during communication. Such an SNR spectrum profile is referred to as the nominal SNR spectrum profile below.

As can be seen from plot 402, the SNR spectrum profile is different in the case of crosstalk connection: the SNR level is around 23 dB for the high frequencies and at a very low level, around 3dB, for the low frequencies. Such an SNR spectrum profile is referred to as a crosstalk profile below.

Accordingly, it has been observed that by analyzing an SNR spectrum as a function of the signal frequencies, one can determine whether or not a communication link comprises a crosstalk link.

**Figure 5** illustrates steps making it possible to characterize an SNR spectrum profile in order to determine whether or not crosstalk effects are involved along a communication path.

According to the embodiments described by reference to Figure 5, analyzing an SNR spectrum is preferred to analyzing a spectrum of the modulated signal (i.e. the spectrum of the received signal). Indeed, since the received signal is composed of modulated symbols (i.e. tones) and of noise, analyzing this signal may lead to confusion. Moreover, analyzing a signal spectrum would require additional hardware.

Conversely, after the received signal has been processed in a demodulator (that applies, in particular a digital filter and a Fast Fourier Transform (FFT) to recover tones and reject noise), information concerning the received signal are available, in particular the SNR level associated with each of the carriers.

As illustrated, the SNR spectrum profile representative of a communication link comprising a crosstalk link is characterized by a first carrier subset denoted P1 in the low frequencies (LF) for which the SNR level is low and a second carrier subset denoted P2 in the high frequencies (HF) for which the SNR level is high. The values of P1 and P2 represent the number of signal carriers in subsets P1 and P2, respectively.

The average SNR level for carrier subset P1 is denoted A1 and average SNR level for carrier subset P2 is denoted A2 in Figure 5.

The distinction between a nominal SNR spectrum profile and a crosstalk profile can be made as a function of the first and second subsets of carriers (P1 and P2) and as a function of the corresponding average SNR values (A1 and A2). For the sake of illustration, the distinction may be made based on the following criteria:

- if P2 / P1 < ΔP (%) and if A2 - A1 > ΔSNR (dB), then it is a crosstalk profile; and
- if P2 / P1 > ΔP (%) and if A2 or A1 is close to the SNR average level for the nominal SNR profile (reference 408 in Figure 4), then it is not a crosstalk profile,

where ΔP (%) is a threshold representing a number of carriers below which it may be considered that a connection is not direct but involves a crosstalk link. For the sake of illustration, the value of ΔP can be set to 40 %, and where ΔSNR (dB) is the minimum difference between the SNR average levels of the carrier subsets P2 and P1. For the sake of illustration, ΔSNR value can be set to 15 dB.

Average level calculation can be based on the moving average, the rolling average, running average, or any other suitable method permitting calculation of an average value on a carrier subset. As variations, the average may be a simple one, a cumulative one, or a weighted one.

Of course, these examples are given for illustration purpose only. Depending on the design and depending of the network configuration, these figures can changed depending on the physical layer parameters.

**Figure 6** illustrates an example of steps for constructing and classifying an SNR spectrum profile according to a first embodiment.

As illustrated, a first step is directed to obtaining data (step 600). To that end, a first device, for example an edge device such as a camera and a second device such as a receiver exchange data creating traffic on the communication link between the devices, that is to say a modulated signal.

It is to be noted that it is assumed that the two devices are associated thus forming a logical network comprising two interconnected nodes (the devices), one of the nodes being a network coordinator (e.g. a central coordinator (CCo) according to the HomePlug AV standard or a basic service set (BSS) manager according to the IEEE1901 standard). According to a common practice, the receiver may be chosen or selected as the network coordinator.

Step 600 makes it possible for the first device to gather data on the carriers and thus to measure a SNR for each carrier (step 602). As mentioned above, such a step may be performed using the demodulator available at the PHY layer of each communication devices.

Next, the measured SNRs are used to identify groups of neighboring carriers having homogenous average SNR values (step 604). For the sake of illustration, neighboring carriers may be selected so that the values of their SNRs belong to an interval of ± 5 dB.

Next, the average SNR values of a high frequency group, for example the group corresponding to the higher frequencies (typically associated with a high average SNR value), and of a low frequency group, for example the group corresponding to the lower frequencies (typically associated with a low average SNR value in case of crosstalk profile), are compared to each other and to predetermined thresholds (step 606), for example as explained by reference to Figure 5. In such a case, P2 / P1 is compared with ΔP, A2 - A1 is compared with ΔSNR, and the average values A2 and A1 are compared with the nominal average SNR (i.e. a reference SNR value).

It is to be noted that in the case according to which the average SNR value of a high frequency group is low, this group may be used in conjunction with the low frequency group to identify a crosstalk profile.

As a result of these comparisons, it is determined whether the analyzed SNR spectrum profile is to be considered as a nominal profile of a direct connection or as a crosstalk profile.

It is observed that steps 600 to 606 in Figure 6 correspond to a particular implementation of steps 302 to 306 in Figure 3.

According to other embodiments, crosstalk effects along a communication path may be identified on a threshold basis in view of the communication path attenuation denoted A in the following.

To that end, the communication path attenuation may be determined as a function of the length of the cable that is used and as a function of the nominal cable attenuation that may be calculated or obtained from the cable manufacturers.

For the sake of illustration, Table 1 in the Appendix is a typical RG59 cable nominal attenuation for a length of 100m as a function of the signal frequency (RG69 is the reference of a specific type of coaxial cable, often used for low-power video and RF signal connection). Such a table may be stored in a device for computing communication path attenuation as a function of the length of the cable.

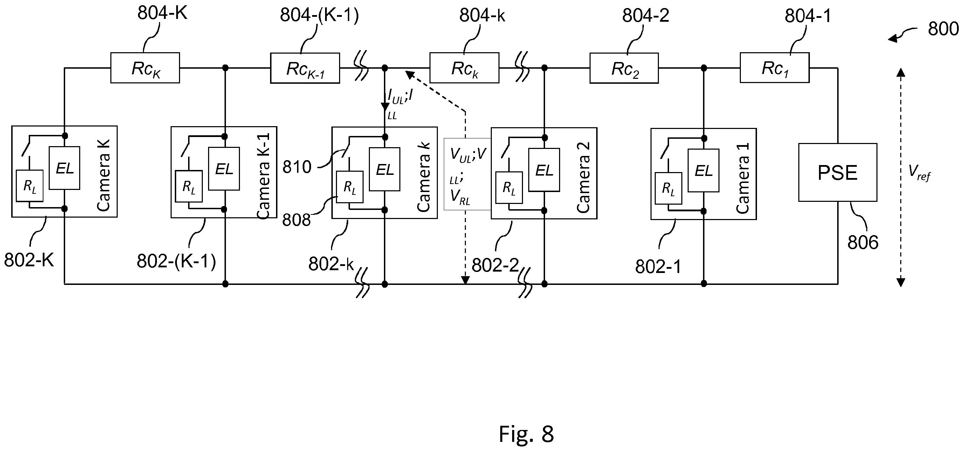

The length of the cable may be obtained from configuration data or may be computed, for example, as a function of the DC resistance. A solution for determining the DC resistance of the cable and thus its length is described by reference to Figure 8.

In view of Table 1 of the Appendix and as an example, the nominal attenuation of a RG59 cable having a length of 200m that is used for transmitting a signal having a frequency of 10Mhz is about 6dB (2 x 2.953 (dB/100m)).

The nominal level of a signal (i.e. the signal level without attenuation), denoted N, is also known by design. It may be recorded in the device used to determine whether or not crosstalk effects are involved along a communication path.

Combined with the determined communication path attenuation, this nominal signal level makes it possible to compute a signal threshold denoted T (T = N - A), as illustrated, for example, in Figure 5 (still with reference T). It corresponds to the minimum SNR level expected for a given cable quality. Accordingly, if there are one or more groups of carriers corresponding to SNR levels below this threshold, it may be concluded that the SNR spectrum profile corresponds to a crosstalk profile.

Additionally, it is to be noted that the low frequency band (LF) and the high frequency band (HF) have a cutoff frequency denoted F defined by the coupling between cables or between receivers (chip-set crosstalk). Generally the crosstalk signal level is very low in the LF band and has a significant signal level in the HF band.

Therefore, if the SNR values of a carrier subset P1 in the low frequencies are below the T level, if the SNR values of a carrier subset P2 in the high frequencies are above the T level, and if the cutoff frequency F is not too low or too high (for example a value between 5 MHz and 25 MHz), then the SNR spectrum profile corresponds to a crosstalk profile.

Naturally, these figures are given for illustration purposes only and are not limitative.

**Figure 7** illustrates an example of steps for constructing and classifying an SNR spectrum profile based on attenuation along a communication path and thresholds.

Steps 700 to 704 are similar to steps 600 to 604 described by reference to Figure 6.

As illustrated, a first step is directed to obtaining data (step 700). To that end, a first device, for example an edge device such as a camera, and a second device such as a receiver exchange data creating traffic on the communication link between the devices, that is to say a modulated signal.

Again, it is to be noted that it is assumed that the two devices are associated thus forming a logical network comprising two interconnected nodes (the devices), one of the nodes being a network coordinator (e.g. a central coordinator (CCo) according to the HomePlug AV standard or a basic service set (BSS) manager according to the IEEE1901 standard). Again, the receiver may be chosen or selected as the network coordinator.

Step 700 makes it possible for the first device to gather data on the carriers and thus to measure a SNR for each carrier (step 702). As mentioned above, such a step may be performed using the demodulator available at the PHY layer of each communication devices.

Next, the measured SNRs are used to identify groups of neighboring carriers having homogenous average SNR values (step 704). For the sake of illustration, neighboring carriers may be selected so that the values of their SNRs belong to an interval of $\pm$ 5 dB.

Next, the cable length is obtained or calculated, for example based on the voltage measurement across the cable, as well as the corresponding attenuation, and a signal threshold T and a cutoff frequency F are determined (step 706), for example as described above.

The average SNR values of the high frequency carrier subset and of the low frequency carrier subset are compared to the determined signal threshold and the cutoff frequency is compared with predetermined thresholds, as explained above.

As a result of these comparisons, it is determined whether the analyzed SNR spectrum profile matches a typical crosstalk profile or a nominal SNR profile.

**Figure 8** presents a circuit for illustrating an example of calculation of the resistance of a cable.

Figure 8 represents an equivalent electrical circuit 800 of a power segment connecting edge devices to a port of power source equipment denoted 806 (for example PSE 104 in Figure 1a).

For the sake of illustration, the illustrated power segment comprises K cameras 802-1 to 802-K, interconnected in a daisy-chained manner with cable segments having resistances 804-1 to 804-K of values $Rc_k$, where $1 \leq k \leq K$ (index k is assumed to increment from the camera closest to the PSE to the camera farthest from the PSE). The number of cameras in the power segment is kept here generic and equal to K. The number K may of course be different from one power segment to another.

It is assumed that the reference voltage $V_{ref}$ powering the circuit is known. The reference voltage, corresponding to the output voltage of the PSE for example, is assumed to be a fixed voltage, typically 56 V.

An unloaded voltage value $V_{UL}$ may be measured across each camera k, by a sensing unit of camera k, when the corresponding load resistance $R_L$ 808 is de-coupled. This voltage value is also referred to as $V_{UL}(k)$. The term "unloaded" is used here in the sense that no load is present other than the camera load (EL). Also, an unloaded current value $I_{UL}$ may be measured crossing each camera k, by the sensing unit of camera k, while in unloaded mode.

Similarly, a local loaded voltage value $V_{LL}$ may be measured across each camera k, by the sensing unit of camera k, when the corresponding load resistance $R_L$ 808 is coupled. This voltage value is also referred to as $V_{LL(k)}$. Also, a local loaded current value $I_{LL}$ may be measured crossing each camera k, by the sensing unit of camera k, while in loaded mode.

Furthermore, a remote loaded voltage value $V_{RL}$ may be measured across one camera *k1,* by the sensing unit of camera *k1,* while the load resistance $R_L$ 808 of camera *k1* is de-coupled (unloaded mode), but while the load resistance $R_L$ 808 of another camera k2 of the same power segment is coupled (loaded mode). This voltage value is also referred to as $V_{RL}(k2, k1)$.

All cameras can exchange their measured values using messages transmitted by the cameras' communication means.

According to a particular method of calculating the resistance of cable segments, the following formula is applied for calculating the resistance of cable segment $Rc_k$:

$$Rc_k = \left(\frac{R_L}{V_{LL(k)}}\right) * \left(V_{ref} - V_{LL(k)} - \left[\left(V_{ref} - V_{UL(k)}\right) * \frac{f(V_{LL(k)})}{f(V_{UL(k)})}\right]\right) - [Rc_{k-1} + \cdots + Rc_1]$$

As discussed above, $V_{UL(k)}$ is the voltage measured by camera *k* while in unloaded mode (load resistance $R_L$ 808 deactivated by means of the switch 810), and $V_{LL}(k)$ is the voltage measured by camera k while in loaded mode (load resistance $R_L$ 808 activated by means of the switch 810).

The function *f(V)* represents the current consumption of a camera based on voltage and reflects the fact that a camera does not necessarily have a linear relationship between current and voltage.

Methods for determining the function f(V) are known to a person skilled in the art. The function can be defined analytically, e.g. as a polynomial function, or digitally, e.g. by means of a lookup table.

In order for the method to be accurate, it is preferable that the definition of the function *f()* and the measurements of $V_{LL(k)}$ in view of determining $f(V_{LL(k)})$ are performed while the camera is in a same steady state, e.g. same operating mode (typically after the camera is started up, but before starting streaming).

It is assumed here that all cameras have the same consumption profile; but it is possible to define a function $f_k(V)$ specific to each camera *k*.

A recursive computation of the resistances of the cable segments is thus applied, i.e.:

$$Rc_1 = \left(\frac{R_L}{V_{LL(1)}}\right) * \left(V_{ref} - V_{LL(1)} - \left[\left(V_{ref} - V_{UL(1)}\right) * \frac{f(V_{LL(1)})}{f(V_{UL(1)})}\right]\right)$$

$$Rc_2 = \left(\frac{R_L}{V_{LL(2)}}\right) * \left(V_{ref} - V_{LL(2)} - \left[\left(V_{ref} - V_{UL(2)}\right) * \frac{f(V_{LL(2)})}{f(V_{UL(2)})}\right]\right) - [Rc_1]$$

$$\cdots$$

$$Rc_K = \left(\frac{R_L}{V_{LL(K)}}\right) * \left(V_{ref} - V_{LL(K)} - \left[\left(V_{ref} - V_{UL(K)}\right) * \frac{f(V_{LL(K)})}{f(V_{UL(K)})}\right]\right) - [Rc_{K-1} + \cdots + Rc_1]$$

From such a resistance value, it is then possible to determine the length of the cable as a function of the characteristics of the latter (typically given by the manufacturer).

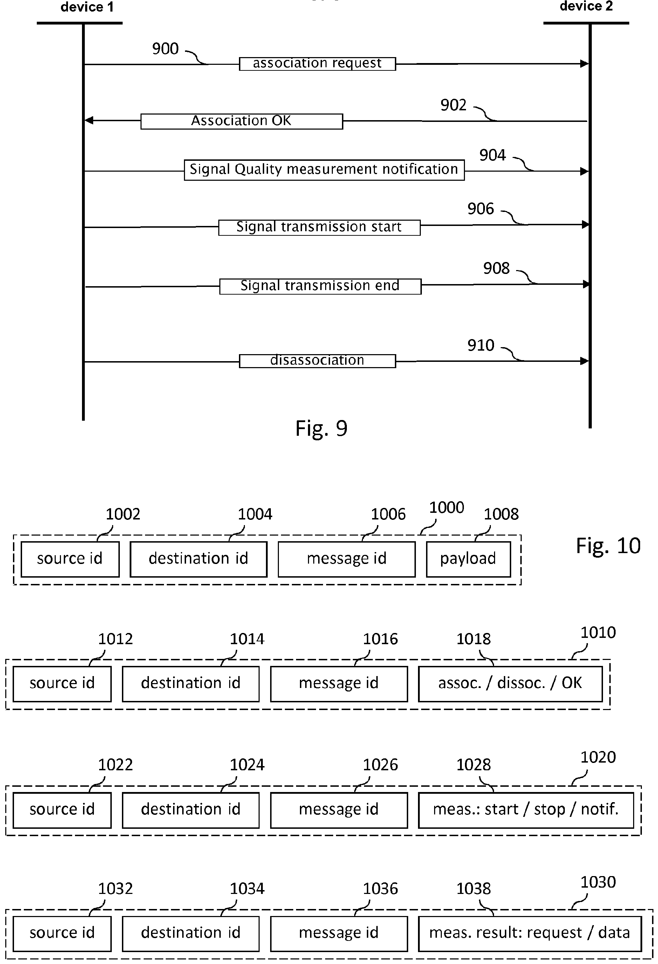

**Figure 9** illustrates an example of exchanges of messages when detecting a wrong association between devices according to embodiments of the invention. These messages may be exchanged when carrying out some of the steps described by reference to Figure 3.

As illustrated, a message is transmitted from a first device to a second device for requesting an association (reference 900). In response to this message, if the association is accepted by the second device, an acknowledgment message is received by the first device from the second device (reference 902).

These messages may conform the power-on network discovery procedure described, for example, in the standard known as HomePlug AV or IEEE1901.

Once the association process has been completed, the first device sends a message (reference 904) to notify that it will generate a signal to measure the link quality. Indeed without data exchange between the devices, it is not possible to calculate the signal spectrum and therefore the SNR of the carriers. According to embodiments, the two devices exchange limited data sequences specifically chosen to explore the whole frequency spectrum.

Transmission of such data sequences is preceded by a message indicating the beginning of the transmission (reference 906) and followed by a message indicating the end of the transmission (reference 908).

It is to be noted that according to other embodiments, these messages directed to quality measurement (i.e. references 902 to 908) are not needed, in particular when measurements are directed to SNR measurements. Indeed, SNR measurements may be performed using normal data traffic, for example data traffic corresponding to transmission of a video stream, between the two devices, for example from the IP layer and/or an application layer. In such a case, a receiver of the first device demodulates the received signal and provides an SNR spectrum of the carriers.

As illustrated, if the first device determines that communication with the second device uses a crosstalk link, it sends a message to the second device to start a disassociation procedure (reference 910). Such a disassociation procedure may be the one described, for example, in the standard known as HomePlug AV or IEEE1901.

**Figure 10** illustrates examples of messages exchanged between adapter modules of edge devices according to embodiments of the invention.

Message 1000 is an example of a message format that may be used for all messages exchanged between any two adapter modules of edge devices. According to this example, the format of message 1000 comprises four components for identifying the message, the message source, the message destination, and transmitting data, as follows:

- a source identifier (source id) denoted 1002 that identifies the source edge device that emitted message 1000;
- a destination identifier (destination id) denoted 1004 that identifies the destination edge device targeted by the message;
- a message identifier (message id) denoted 1006 that uniquely identifies the message; and
- payload (or "useful" data) denoted 1008.

Message 1010 is an example of a message that may be used to indicate to a central coordinator that the edge device at the origin of the message is in association mode, in disassociation mode, or that the association is OK. As illustrated, message 1010 comprises:

- a source identifier denoted 1012 that identifies the source edge device that emitted message 1010;
- a destination identifier denoted 1014 that identifies the destination edge device targeted by the message, here a central coordinator;
- a message identifier denoted 1016 that uniquely identifies the message; and
- an association status denoted 1018, that may take one of the values association, disassociation, and association OK.

Message 1020 is an example of a message that may be used to send measurement status at the edge device at the origin of the message. As illustrated, message 1020 comprises:

- a source identifier denoted 1022 that identifies the source edge device that emitted message 1020, here a master device;
- a destination identifier denoted 1024 that identifies the destination edge device targeted by the message, here a receiver device;
- a message identifier denoted 1026 that uniquely identifies the message; and
- a measurement status denoted 1028, that may take one of the values start, stop, and notification.

Message 1030 is an example of a message that may be used to send measurement data at the edge device at the origin of the message. As illustrated, message 1030 comprises:

- a source identifier (source id) denoted 1032 that identifies the source edge device that emitted message 1030;
- a destination identifier (destination id) denoted 1034 that identifies the destination edge device targeted by the message;
- a message identifier (message id) denoted 1036 that uniquely identifies the message; and
- measurement data denoted 1038 that may comprise the data themselves or a request for these data.

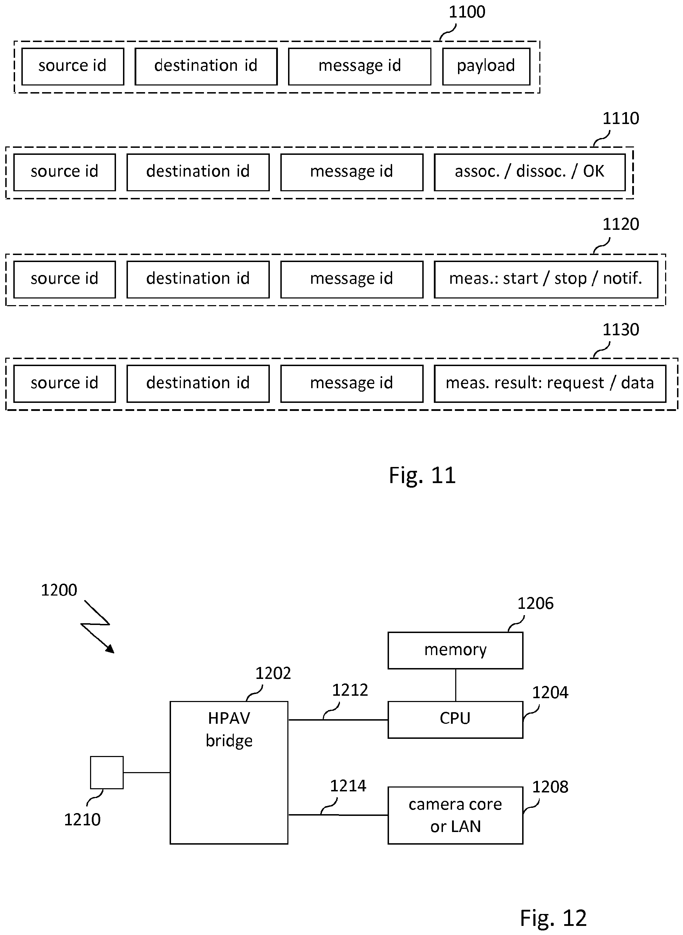

**Figure 11** illustrates examples of messages exchanged between an adapter module and an IP camera of an edge device according to embodiments of the invention.

As illustrated, messages 1100, 1110, 1120, and 1130 are substantially similar to messages 1000, 1010, 1020, and 1030, respectively.

**Figure 12** is an example of a functional bloc diagram of an edge device, such as a camera, and of a receiver.

For the sake of clarity, power supplies are not represented. According to the given example, the receiver gets power from a standard AC power outlet (e.g. 110 or 220 volts). The AC power is converted to DC power suitable for cameras (for example 48 or 56 volts) by an AC/DC converter then draw on cables. At camera's end, power is received via cables as described above.

The edge device or receiver 1200 comprises a cable connection or port denoted 1210, a HomePlug AV bridge denoted 1202, a central processing unit (CPU) denoted 1204 with a dedicated memory denoted 1206, and a camera core for the camera or a LAN connection for a receiver denoted 1208.

For the sake of illustration, cable connection 1210 may comprise a connector of the BNC type when a coaxial cable is used, a connector of the RJ45 type when a UTP or FTP cable is used, and another type of connector when a two-wire cable is used.

As illustrated, HomePlug AV bridge 1202 is connected to CPU 1204 and to camera core or LAN 1208 by connections 1212 and 1214, respectively, that may be, for example, of the IP type.

HomePlug AV Bridge 1202 is responsible for encapsulating Ethernet traffic received from camera core or LAN 1208 or from CPU 1104 into HomePlug AV packets and to send HomePlug AV packets via connector 1210.

CPU 1204 exchanges messages via connection 1212 with HomePlug AV Bridge 1202 to get information on the link between a receiver and an edge device. According to embodiments, CPU 1204 is in charge of running the algorithms described by reference to Figures 3, 6, and 7, that may be stored in memory 1206 and is in charge of determining a spectrum profile.

Connection 1214 is dedicated to the camera core data traffic (video and control of the camera) or LAN traffic in the receiver.

The invention is defined by the appended claims.

In the claims, the word "comprising" does not exclude other elements or steps, and the indefinite article "a" or "an" does not exclude a plurality. A single processor or other unit may fulfil the functions of several items recited in the claims. The mere fact that different features are recited in mutually different dependent claims does not indicate that a combination of these features cannot be advantageously used. Any reference signs in the claims should not be construed as limiting the scope of the invention.

APPENDIX

Table 1: RG59 cable nominal attenuation

| Frequence (MHz) | Attenuation (dB/100m) |
|---|---|
| 1.000 | 0.984 |
| 3.600 | 1.969 |
| 5.000 | 2.067 |
| 6.000 | 2.264 |
| 7.000 | 2.428 |
| 10.000 | 2.953 |
| 12.000 | 2.986 |
| 25.000 | 4.265 |
| 67.500 | 6.726 |
| 71.500 | 6.890 |
| 88.500 | 7.218 |
| 100.000 | 7.546 |
| 135.000 | 8.859 |
| 143.000 | 9.187 |
| 180.000 | 10.171 |
| 270.000 | 12.468 |
| 360.000 | 14.436 |
| 540.000 | 18.046 |
| 720.000 | 20.998 |

(continued)

| Frequence (MHz) | Attenuation (dB/100m) |
|---|---|
| 750.000 | 21.327 |
| 1 000.000 | 24.936 |
| 1 500.000 | 30.513 |
| 2 000.000 | 35.763 |
| 2 250.000 | 38.060 |
| 3 000.000 | 43.965 |
| 4 500.000 | 53.808 |

**Claims**

1. A method by a first network device of managing communication between the first network device and a second network device in a communication network interconnecting a plurality of network devices via a plurality of communication lines, the method comprising the steps of:

   associating the first device with the second device via a communication link so that the first device and the second device can exchange data;
   receiving data from the second device via the communication link;
   constructing a signal-to-noise ratio profile associating a signal-to-noise value with a set of signal carriers of the communication link during the receiving step; and
   based on the constructed signal-to-noise ratio profile, determining whether or not the communication link comprises at least two communication lines linked via crosstalk,
   wherein the receiving step, the constructing step, and the determining step are carried out in the first device; and
   wherein the step of determining whether or not the communication link comprises at least two communication lines linked via crosstalk comprises a step of determining at least two subsets of signal carriers, differences between signal-to-noise values associated with signal carriers of one of the at least two subsets being lower than a threshold, for each of the at least two subsets, the step of determining whether or not the communication link comprises at least two communication lines linked via crosstalk being based on characteristics of the at least two subsets.

2. The method of claim 1, further comprising a step of disassociating the first device from the second device if the communication link comprises at least two communication lines linked via crosstalk.

3. The method of claim 1, wherein one of the at least two subsets comprises signal carriers representative of low frequency signals and another one of the at least two subsets comprises signal carriers representative of high frequency signals.

4. The method of claim 3, further comprising a step of computing a mean signal-to-noise value for each of the at least two subsets and of determining a number of signal carriers in each of the at least two subsets.

5. The method of claim 4, wherein the step of determining whether or not the communication link comprises at least two communication lines linked via crosstalk comprises comparing a ratio of computed numbers of signal carriers to a threshold and comprises comparing a difference of computed mean signal-to-noise values with a threshold or comparing computed mean signal-to-noise values of subsets with a reference signal-to-noise value.

6. The method of claim 1, wherein the step of determining whether or not the communication link comprises at least two communication lines linked via crosstalk comprises a step of computing a second threshold as a function of a reference signal level and of a signal attenuation along the at least one communication line.

7. The method of claim 6, wherein the step of determining whether or not the communication link comprises at least two communication lines linked via crosstalk further comprising a step of comparing a mean signal-to-noise value of at least one of the at least two subsets with the computed second threshold.

8. The method of claim 7, wherein the step of determining whether or not the communication link comprises at least two communication lines linked via crosstalk further comprises a step of computing a cut-off frequency for signal carriers corresponding to signal low frequencies and to signal high frequencies, the step of determining whether or not the communication link comprises at least two communication lines linked via crosstalk being further based on the computed cut-off frequency.

9. A computer program product for a programmable apparatus, the computer program product comprising instructions for carrying out each step of the method according to any one of claims 1 to 8 when the computer program is loaded and executed by a programmable apparatus.

10. A non-transitory computer-readable storage medium storing instructions of a computer program for implementing the method according to any one of claims 1 to 8.

11. An apparatus for a first network device for managing communication with a second network device in a communication network interconnecting a plurality of network devices via a plurality of communication lines, the apparatus comprising a microprocessor configured for carrying out each step of the method according to any one of claims 1 to 8.

**Patentansprüche**

1. Verfahren eines ersten Netzwerkgeräts eines Verwaltens von Kommunikation zwischen dem ersten Netzwerkgerät und einem zweiten Netzwerkgerät in einem Kommunikationsnetzwerk, das eine Vielzahl von Netzwerken über eine Vielzahl von Kommunikationsleitungen verbindet, wobei das Verfahren die folgenden Schritte aufweist:

ein Verknüpfen des ersten Geräts mit dem zweiten Gerät über eine Kommunikationsverbindung derart, dass das erste Gerät und das zweite Gerät Daten austauschen können,
ein Empfangen von Daten von dem zweiten Gerät über die Kommunikationsverbindung,
ein Erstellen eines Signalrauschverhältnisprofils, das einen Signalrauschverhältniswert mit einem Satz von Signalträgern der Kommunikationsverbindung während des Empfangsschritts verknüpft, und
ein Bestimmen, basierend auf dem erstellten Signalrauschverhältnisprofil, ob die Kommunikationsverbindung zumindest zwei Kommunikationsleitungen aufweist oder nicht, die mittels Übersprechen verbunden sind,
wobei der Empfangsschritt, der Erstellschritt, und der Bestimmschritt bei dem ersten Gerät durchgeführt werden, und
wobei der Schritt eines Bestimmens, ob die Kommunikationsverbindung zumindest zwei Kommunikationsleitungen aufweist oder nicht, die mittels Übersprechen verbunden sind, einen Schritt eines Bestimmens von zumindest zwei Untersätzen von Signalträgern umfasst, wobei Unterschiede zwischen mit Signalträgern eines der zumindest zwei Untersätze verknüpften Signalrauschverhältniswerten geringer als eine Schwelle sind, wobei für jeden der zwei Untersätze der Schritt eines Bestimmens, ob die Kommunikationsverbindung zumindest zwei Kommunikationsleitungen aufweist oder nicht, die mittels Übersprechen verbunden sind, auf Charakteristika der zumindest zwei Untersätze basiert.

2. Verfahren nach Anspruch 1, ferner mit einem Schritt eines Trennens des ersten Geräts von dem zweiten Gerät, wenn die Kommunikationsverbindung zumindest zwei Kommunikationsleitungen aufweist, die mittels Übersprechen verbunden sind.

3. Verfahren nach Anspruch 1, wobei einer der zumindest zwei Untersätze Signalträger umfasst, die repräsentativ für Niedrigfrequenzsignale sind, und ein anderer der zumindest zwei Untersätze Signalträger umfasst, die repräsentativ für Hochfrequenzsignale sind.

4. Verfahren nach Anspruch 3, ferner mit einem Schritt eines Berechnens eines Signalrauschmittelwerts für jeden der zumindest zwei Untersätze und eines Bestimmens einer Anzahl von Signalträgern in jedem der zumindest zwei Untersätze umfasst.

5. Verfahren nach Anspruch 4, wobei der Schritt eines Bestimmens, ob die Kommunikationsverbindung zumindest zwei Kommunikationsleitungen aufweist oder nicht, die mittels Übersprechen verbunden sind, ein Vergleichen eines Verhältnisses von berechneten Anzahlen von Signalträgern zu einer Schwelle umfasst und ein Vergleichen einer Differenz von berechneten Signalrauschmittelwerten mit einer Schwelle oder ein Vergleichen von berechneten Signalrauschmittelwerten von Untersätzen mit einem Signalrauschreferenzwert umfasst.

**6.** Verfahren nach Anspruch 1, wobei der Schritt eines Bestimmens, ob die Kommunikationsverbindung zumindest zwei Kommunikationsleitungen aufweist oder nicht, die mittels Übersprechen verbunden sind, einen Schritt eines Berechnens einer zweiten Schwelle als eine Funktion eines Referenzsignalpegels und einer Signalabschwächung entlang der zumindest einen Kommunikationsleitung umfasst.

**7.** Verfahren nach Anspruch 6, wobei der Schritt eines Bestimmens, ob die Kommunikationsverbindung zumindest zwei Kommunikationsleitungen aufweist oder nicht, die mittels Übersprechen verbunden sind, ferner einen Schritt eines Vergleichens eines Signalrauschmittelwerts von zumindest einem der zumindest zwei Untersätze mit der berechneten zweiten Schwelle umfasst.

**8.** Verfahren nach Anspruch 7, wobei der Schritt eines Bestimmens, ob die Kommunikationsverbindung zumindest zwei Kommunikationsleitungen aufweist oder nicht, die mittels Übersprechen verbunden sind, ferner einen Schritt eines Berechnens einer Grenzfrequenz für Signalträger entsprechend Signalniedrigfrequenzen und Signalhochfrequenzen umfasst, wobei der Schritt eines Bestimmens, ob die Kommunikationsverbindung zumindest zwei Kommunikationsleitungen aufweist oder nicht, die mittels Übersprechen verbunden sind, ferner auf der berechneten Grenzfrequenz basiert.

**9.** Computerprogrammprodukt für eine programmierbare Vorrichtung, wobei das Computerprogrammprodukt Anweisungen zu einer Ausführung jedes Schritts des Verfahrens nach einem der Ansprüche 1 bis 8, wenn das Computerprogramm durch eine programmierbare Vorrichtung geladen und ausgeführt ist, umfasst.

**10.** Nichttransitorisches computerlesbares Speichermedium, das Anweisungen eines Computerprogramms für eine Umsetzung des Verfahrens nach einem der Ansprüche 1 bis 8 speichert.

**11.** Vorrichtung für ein erstes Netzwerkgerät für eine Verwaltung von Kommunikation mit einem zweiten Netzwerkgerät in einem Kommunikationsnetzwerk, das eine Vielzahl von Netzwerken über eine Vielzahl von Kommunikationsleitungen verbindet, wobei die Vorrichtung einen Mikroprozessor umfasst, der für eine Ausführung jedes Schritts des Verfahrens nach einem der Ansprüche 1 bis 8 eingerichtet ist.

## Revendications

**1.** Procédé, par un premier dispositif réseau, de gestion d'une communication entre le premier dispositif réseau et un second dispositif réseau dans un réseau de communication interconnectant une pluralité de dispositifs réseau via une pluralité de lignes de communication, le procédé comprenant les étapes consistant à :

associer le premier dispositif avec le second dispositif via une liaison de communication de sorte que le premier dispositif et le second dispositif puissent échanger des données ;
recevoir des données à partir du second dispositif via la liaison de communication ;
construire un profil de rapport signal sur bruit associant une valeur de signal sur bruit à un ensemble de porteuses de signal de la liaison de communication au cours de l'étape de réception ; et
sur la base du profil de rapport signal sur bruit construit, déterminer si la liaison de communication comprend ou non au moins deux lignes de communication reliées via diaphonie,
dans lequel l'étape de réception, l'étape de construction et l'étape de détermination sont effectuées dans le premier dispositif ; et
dans lequel l'étape consistant à déterminer si la liaison de communication comprend ou non au moins deux lignes de communication reliées via diaphonie comprend une étape consistant à déterminer au moins deux sous-ensembles de porteuses de signal, des différences entre des valeurs de signal sur bruit associées à des porteuses de signal de l'un des au moins deux sous-ensembles étant inférieures à un seuil, pour chacun des au moins deux sous-ensembles, l'étape consistant à déterminer si la liaison de communication comprend ou non au moins deux lignes de communication reliées via diaphonie étant basée sur des caractéristiques des au moins deux sous-ensembles.

**2.** Procédé selon la revendication 1, comprenant en outre une étape consistant à dissocier le premier dispositif du second dispositif si la liaison de communication comprend au moins deux lignes de communication reliées via diaphonie.

**3.** Procédé selon la revendication 1, dans lequel l'un des au moins deux sous-ensembles comprend des porteuses de signal représentatives de signaux basse fréquence et un autre des au moins deux sous-ensembles comprend des porteuses de signal représentatives de signaux haute fréquence.

4. Procédé selon la revendication 3, comprenant en outre une étape consistant à calculer une valeur de signal sur bruit moyenne pour chacun des au moins deux sous-ensembles et consistant à déterminer un nombre de porteuses de signal dans chacun des au moins deux sous-ensembles.

5. Procédé selon la revendication 4, dans lequel l'étape consistant à déterminer si la liaison de communication comprend ou non au moins deux lignes de communication reliées via diaphonie comprend l'étape consistant à comparer un rapport de nombres calculés de porteuses de signal avec un seuil et comprend l'étape consistant à comparer une différence de valeurs de signal sur bruit moyennes calculées avec un seuil ou à comparer des valeurs de signal sur bruit moyennes calculées de sous-ensembles avec une valeur de signal sur bruit de référence.

6. Procédé selon la revendication 1, dans lequel l'étape consistant à déterminer si la liaison de communication comprend ou non au moins deux lignes de communication reliées via diaphonie comprend une étape consistant à calculer un second seuil en fonction d'un niveau de signal de référence et d'une atténuation de signal le long de l'au moins une ligne de communication.

7. Procédé selon la revendication 6, dans lequel l'étape consistant à déterminer si la liaison de communication comprend ou non au moins deux lignes de communication reliées via diaphonie comprend en outre une étape consistant à comparer une valeur de signal sur bruit moyenne d'au moins l'un des au moins deux sous-ensembles avec le second seuil calculé.

8. Procédé selon la revendication 7, dans lequel l'étape consistant à déterminer si la liaison de communication comprend ou non au moins deux lignes de communication reliées via diaphonie comprend en outre une étape consistant à calculer une fréquence de coupure pour des porteuses de signal correspondant aux basses fréquences de signal et aux hautes fréquences de signal, l'étape consistant à déterminer si la liaison de communication comprend ou non au moins deux lignes de communication reliées via diaphonie étant en outre basée sur la fréquence de coupure calculée.

9. Produit programme d'ordinateur pour un appareil programmable, le produit programme d'ordinateur comprenant des instructions pour effectuer chaque étape du procédé selon l'une quelconque des revendications 1 à 8 lorsque le programme d'ordinateur est chargé et exécuté par un appareil programmable.

10. Support de stockage non transitoire lisible par ordinateur stockant des instructions d'un programme d'ordinateur pour la mise en œuvre du procédé selon l'une quelconque des revendications 1 à 8.

11. Appareil pour un premier dispositif réseau pour la gestion d'une communication avec un second dispositif réseau dans un réseau de communication interconnectant une pluralité de dispositifs réseau via une pluralité de lignes de communication, l'appareil comprenant un microprocesseur configuré pour effectuer chaque étape du procédé selon l'une quelconque des revendications 1 à 8.

Fig. 1a

132

140

126 ← → Ethernet bridge ← PoE Ethernet → 130

124

138

HomePlug AV bridge

128 ← →

134 ←

power manager

142

136 ←

144

Fig. 1b

132

EoC module 1.05V
EoC module 3.3V
EoC module 11V

Dc-Dc converter

156

124

154

126

PoE PD

150-1

150-2

PoE PSE

130

158

128

sens-2

148-2

SW2

μC

SW3

sens-1

148-1

SW1

134

146

136

NVram

152

142

Fig. 1c

102''

edge
device 2

102'

edge
device 1

116'

204

116''

110'

110''

200

receiver 1

receiver 2

202

Ethernet switch

**Fig. 2**

106

LAN

300 — detecting a device and associating
with the detected device

302 — receiving data from the associated
device and obtaining information
about the received data

304 — constructing a spectrum profile

306

no ← end — crosstalk
link?

yes

308 — disassociating the device

**Fig. 3**

Fig. 4

402

Fig. 5

Fig. 6

**700** — waiting for data to be received from second device

**702** — measuring an SNR for each carrier

**704** — identifying groups of SNRs having homogeneous average SNR values

**706** — computing thresholds as a function of the length of the cable and of signal attenuation

**708** — comparing average SNR values with calculated threshold and classifying the SNR spectrum profile

Fig. 7

Fig. 8

device 1                                                                    device 2

900
association request

902
Association OK

904
Signal Quality measurement notification

906
Signal transmission start

908
Signal transmission end

910
disassociation

Fig. 9

| 1002 | 1004 | 1006 | 1000 | 1008 |
|---|---|---|---|---|
| source id | destination id | message id | | payload |

Fig. 10

| 1012 | 1014 | 1016 | 1018 | 1010 |
|---|---|---|---|---|
| source id | destination id | message id | assoc. / dissoc. / OK | |

| 1022 | 1024 | 1026 | 1028 | 1020 |
|---|---|---|---|---|
| source id | destination id | message id | meas.: start / stop / notif. | |

| 1032 | 1034 | 1036 | 1038 | 1030 |
|---|---|---|---|---|
| source id | destination id | message id | meas. result: request / data | |

1100

| source id | destination id | message id | payload |

1110

| source id | destination id | message id | assoc. / dissoc. / OK |

1120

| source id | destination id | message id | meas.: start / stop / notif. |

1130

| source id | destination id | message id | meas. result: request / data |

Fig. 11

1200

1206

memory

1202

HPAV
bridge

1212

CPU 1204

1210

1214

camera core
or LAN 1208

Fig. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016165948 A
- WO 2012109327 A
- WO 2012119382 A
- US 2017026206 A